# EUROPÄISCHE PATENTSCHRIFT

(11) **EP 2 539 200 B1**
(45) Veröffentlichungstag und Bekanntmachung des Hinweises auf die Patenterteilung: **11.01.2017**
(21) Anmeldenummer: 11706521.9
(22) Anmeldetag: 23.02.2011
(51) Int. Cl.: B61L 15/00, H04L 12/40

(54) **KOMMUNIKATIONSNETZWERK FÜR EIN SPURGEBUNDENES FAHRZEUG**
COMMUNICATION NETWORK FOR A RAIL VEHICLE
RÉSEAU DE COMMUNICATION POUR VÉHICULE FERROVIAIRE

(30) Priorität: 25.02.2010 DE 102010010074
(43) Veröffentlichungstag der Anmeldung: 02.01.2013
(73) Patentinhaber: Siemens Aktiengesellschaft, 80333 München (DE)
(72) Erfinder: BEYER, Ralf, 91096 Mörendorf (DE); HAGER, Werner, 90765 Fürth (DE)
(86) Internationale Anmeldenummer: PCT/EP2011/052686
(87) Internationale Veröffentlichungsnummer: WO 2011/104278

(56) Entgegenhaltungen:
- EP-A1- 1 662 453
- EP-A1- 1 995 148
- EP-A2- 1 422 833
- WO-A1-2009/000544
- HUBERT KIRRMANN: "THE IEC/IEEE TRAIN COMMUNICATION NETWORK", IEEE MICRO, IEEE SERVICE CENTER, LOS ALAMITOS, CA, US, 1. Januar 2001 (2001-01-01), Seiten 81-92, XP002471919, ISSN: 0272-1732

## Beschreibung

Die vorliegende Erfindung betrifft ein spurgebundenes Fahrzeug, insbesondere Schienenfahrzeug, mit mehreren Wagen und einem Kommunikationsnetzwerk zur Übertragung von Datensignalen, das zwei durch die Wagen des Fahrzeugs verlaufende Leitungen umfasst.

Ein derartiges, in der Form eines Schienenfahrzeugs ausgebildetes Fahrzeug ist insbesondere aus der EP 1 422 833 A2 bekannt.

Das Dokument "The IEC/IEEE Train Communication Network", Hubert Kirrmann, Pierre A. Zuber, aus "IEEE Micro", Ausgabe März-April 2001, Seiten 81-92, beschreibt ebenfalls ein Schienenfahrzeug mit einem Kommunikationsnetzwerk, welches zwei durch die Wagen des Schienenfahrzeugs verlaufende Leitungen aufweist.

Ein solches spurgebundenes Fahrzeug in Form eines Schienenfahrzeugs mit mehreren Wagen und einem Ethernet-basierten Kommunikationsnetzwerk ist ferner beispielsweise aus dem Fachartikel "Informations- und Steuerungstechnik auf Schienenfahrzeugen; Barbara Schmitz; elektronik industrie 8/9 - 2008, Seiten 20 bis 22" bekannt.

Generell werden in Schienenfahrzeugen zunehmend Kommunikationsnetzwerke gemäß der Ethernet-Technik zur Übertragung von Datensignalen eingesetzt. Der Vorteil der Verwendung von solchen Ethernet-basierten Kommunikationsnetzwerken besteht dabei insbesondere darin, dass entsprechende Kommunikationsnetzwerke in anderen Bereichen der Technik weit verbreitet sind und daher die für den Aufbau der Kommunikationsnetzwerke erforderlichen Komponenten vergleichsweise kostengünstig am Markt erhältlich sind. Darüber hinaus stehen für entsprechende Kommunikationsnetzwerke auch Kommunikationsprotokolle und Applikationen zur Verfügung, die sich in anderen, gegebenenfalls auch sicherheitskritischen Anwendungen bereits bewährt haben.

Beim Einsatz von Kommunikationsnetzwerken im Bereich der spurgebundenen Fahrzeuge treten generell verschiedene für diese Anwendung spezifische Problemstellungen auf. So sind bei der Verlegung von Kabeln entsprechender Kommunikationsnetzwerke die für den jeweiligen Fahrzeugtyp geltenden Brandschutzrichtlinien zu beachten. Des Weiteren können sich bei spurgebundenen Fahrzeugen Leitungslängen ergeben, welche die beispielsweise für Kommunikationsnetzwerke mit Twisted-Pair-Kabeln der Kategorie 5 (CAT5) gemäß dem Standard IEEE 802.3 vorgesehenen maximale Leitungslänge von 100 Meter übersteigen. Im Sinne einer möglichst großen Stabilität des Kommunikationsnetzwerkes ist es darüber hinaus wünschenswert, dass das Kommunikationsnetzwerk mit einer möglichst geringen Anzahl von elektronischen Geräten in Form von aktiven Netzwerkkomponenten auskommt.

Der vorliegenden Erfindung liegt die Aufgabe zugrunde, ein spurgebundenes Fahrzeug, insbesondere Schienenfahrzeug, mit mehreren Wagen und einem Kommunikationsnetzwerk zur Übertragung von Datensignalen, das zwei durch die Wagen des Fahrzeugs verlaufende Leitungen umfasst, anzugeben, das hinsichtlich des Aufbaus des Kommunikationsnetzwerkes besonders vorteilhaft ist.

Diese Aufgabe wird für ein spurgebundenes Fahrzeug, insbesondere Schienenfahrzeug, mit mehreren Wagen und einem Kommunikationsnetzwerk zur Übertragung von Datensignalen, das zwei durch die Wagen des Fahrzeugs verlaufende Leitungen umfasst, erfindungsgemäß dadurch gelöst, dass in den Wagen jeweils eine der Leitungen in einem ersten Bereich und die andere der Leitungen in einem von diesem räumlich getrennten zweiten Bereich verläuft, in zumindest einem der Wagen der Verlauf der jeweiligen einen Leitung von dem ersten Bereich in den zweiten Bereich und der Verlauf der jeweiligen anderen Leitung von dem zweiten Bereich in den ersten Bereich wechselt und in dem ersten Bereich Netzwerkkomponenten zur Auffrischung der in den Leitungen übertragenen Datensignale vorgesehen sind.

Erfindungsgemäß ist das spurgebundene Fahrzeug somit derart ausgebildet, dass in dem Wagen jeweils eine der Leitungen in einem ersten Bereich und die andere der Leitungen in einem von diesem räumlich getrennten zweiten Bereich verläuft. Hieraus ergeben sich erhebliche Vorteile im Hinblick auf eine erforderliche Redundanz, da Störungen etwa im Falle eines Brandes, eines technischen Defekts oder eines Unfalls, in der Regel lediglich einen der beiden Bereiche betreffen werden und somit eine Grundverfügbarkeit des Kommunikationsnetzwerkes mittels der jeweils anderen Leitung erhalten bleibt.

Dadurch, dass weiterhin in zumindest einem der Wagen der Verlauf der jeweiligen einen Leitung von dem ersten Bereich in den zweiten Bereich und der Verlauf der jeweiligen anderen Leitung von dem zweiten Bereich in den ersten Bereich wechselt, wird es darüber hinaus vorteilhafterweise ermöglicht, dass lediglich in einem der räumlich getrennten Bereiche, nämlich dem ersten Bereich, Netzwerkkomponenten zur Auffrischung der in der jeweiligen Leitung übertragenen Datensignale erforderlich sind. Durch den gekreuzten Verlauf der beiden Leitungen ist es hierbei möglich, dass sowohl für die eine als auch für die andere Leitung die Auffrischung der in der jeweiligen Leitung übertragenen Datensignale in dem ersten Bereich erfolgt. Dies bietet den Vorteil, dass in dem zweiten Bereich auf entsprechende Netzwerkkomponenten zur Auffrischung der jeweiligen Datensignale verzichtet werden kann, wodurch sich Planung und Einbau des Kommunikationsnetzwerkes insgesamt erheblich vereinfachen. Darüber hinaus werden gegenüber einem alternativ vorstellbaren Aufbau des Kommunikationsnetzwerkes, bei dem jeweils sowohl in dem ersten als auch in dem zweiten Bereich Netzwerkkomponenten zur Auffrischung der übertragenen Datensignale vorgesehen sind, entsprechende Netzwerkkomponenten eingespart, wodurch die Störunempfindlichkeit, insbesondere gegenüber Ausfällen der Stromversorgung, erheblich verbessert wird, da die jeweilig in dem zweiten Bereich verlaufende Leitung ohne aktive Komponenten auskommt. Durch eine entsprechende Minimierung der aktiven Komponenten ergibt sich letztlich somit eine erhöhte Verfügbarkeit des Kommunikationsnetzwerkes.

Die Netzwerkkomponenten zur Auffrischung der in den Leitungen übertragenen Datensignale können in unterschiedlicher Art und Weise ausgeführt sein. Letztlich ist hierbei lediglich von Bedeutung, dass die entsprechende Netzwerkkomponente eine Auffrischung beziehungsweise Regenerierung der übertragenen Datensignale derart durchführt, dass insbesondere eine Realisierung der in dem spurgebundenen Fahrzeug erforderlichen Länge der Leitungen ermöglicht wird.

Ein Kreuzen der beiden Leitungen von dem ersten in den zweiten Bereich und umgekehrt kann im Rahmen der vorliegenden Erfindung in einem der Wagen, d.h. einmalig, oder in mehreren der Wagen, d.h. mehrmalig, erfolgen. Entscheidend ist hierbei lediglich, dass zumindest eine entsprechende Kreuzungsstelle vorhanden ist und in dem ersten Bereich zumindest zwei Netzwerkkomponenten derart angeordnet sind, dass insgesamt sowohl eine Auffrischung der in der einen Leitung als auch der in der anderen Leitung übertragenen Datensignale bewirkt wird.

Bei dem erfindungsgemäßen spurgebundenen Fahrzeug kann es sich beispielsweise um ein Schienenfahrzeug beliebiger Art, d.h. beispielsweise einen Triebwagen, eine Lokomotive, eine Straßen- oder Stadtbahn, eine U-Bahn, einen Güterzug, eine Gruppe antriebsloser Wagen zum Personentransport oder eine Kombination derselben handeln. Darüber hinaus kann das erfindungsgemäße spurgebundene Fahrzeug beispielsweise auch als Magnetschwebebahn oder spurgeführtes Fahrzeug mit Gummirädern ausgeführt sein.

Das Kommunikationsnetzwerk des erfindungsgemäßen Schienenfahrzeugs kann beispielsweise der Türsteuerung, der Steuerung der Klimatisierung, der Übertragung von Ansagen, der Brandmeldung und/oder der Antriebs- und Bremssteuerung dienen, wobei die entsprechenden Systeme in der Regel lediglich an eine der beiden Leitungen des Kommunikationsnetzwerkes angeschlossen sind.

Grundsätzlich kann der Wechsel der Leitungen zwischen dem ersten Bereich und dem zweiten Bereich an einer beliebigen Stelle beziehungsweise an beliebigen Stellen des Fahrzeugs erfolgen. So ist es beispielsweise denkbar, dass eine entsprechende Kreuzungsstelle in Fahrzeuglängsrichtung gesehen im Bereich der jeweiligen Wagenmitte vorgesehen ist.

Vorzugsweise ist das erfindungsgemäße Fahrzeug derart weitergebildet, dass beim Übergang von zumindest einem der Wagen zu zumindest einem benachbarten der Wagen der Verlauf der jeweiligen einen Leitungen von dem ersten Bereich des einen Wagens in den zweiten Bereich des benachbarten Wagens und der Verlauf der jeweiligen anderen Leitung von dem zweiten Bereich des einen Wagens in den ersten Bereich des benachbarten Wagens wechselt. Dies bedeutet, dass innerhalb der einzelnen Wagen jeweils die eine der Leitungen in dem ersten Bereich und die andere der Leitungen in dem zweiten Bereich verläuft. Ein Kreuzen der Leitungen erfolgt somit ausschließlich im Bereich des Übergangs zwischen zwei benachbarten Wagen. Es sei darauf hingewiesen, dass die Formulierung "beim Übergang von zumindest einem der Wagen zu zumindest einem benachbarten der Wagen" nicht dahingehend zu verstehen ist, dass das Kreuzen der Leitungen notwendigerweise im Bereich eines - Fahrgästen den Wechsel in einen anderen Wagen erlaubenden - Wagenübergangs erfolgt. Stattdessen wird durch diese Formulierung insbesondere auch der Fall umfasst, dass ein Kreuzen der Leitungen an dem Ende des jeweiligen Wagens vorgesehen ist. Wesentlich ist hierbei somit lediglich, dass in dem benachbarten Wagen selbst die Leitungen jeweils in dem anderen Bereich verlaufen.

Gemäß einer weiteren besonders bevorzugten Weiterbildung ist das erfindungsgemäße spurgebundene Fahrzeug derart ausgestaltet, dass bei jedem Übergang von einem der Wagen zu einem benachbarten der Wagen des Fahrzeugs der Verlauf der jeweiligen einen Leitung von dem ersten Bereich in den zweiten Bereich und der Verlauf der jeweiligen anderen Leitung von dem zweiten Bereich in den ersten Bereich wechselt und in dem ersten Bereich von jedem der Wagen des Fahrzeugs jeweils zumindest eine Netzwerkkomponente zur Auffrischung der in der jeweiligen Leitung übertragenen Datensignale vorgesehen ist. Dies bedeutet, dass die beiden Leitungen in benachbarten Wagen jeweils in unterschiedlichen Bereichen verlaufen, d.h. dass bei jedem Übergang von einem Wagen zu einem benachbarten Wagen eine entsprechende Kreuzungsstelle vorliegt. Dadurch, dass in dem ersten Bereich von jedem Wagen des Fahrzeugs jeweils zumindest eine Netzwerkkomponente zur Auffrischung der in der jeweiligen Leitung übertragenen Datensignale vorgesehen ist, weist somit jede der beiden Leitungen in jedem zweiten Wagen zumindest eine entsprechende Netzwerkkomponente auf, wodurch sichergestellt ist, dass unzulässig große Längen der Leitungen beziehungsweise durch entsprechende Leitungslängen verursachte Störungen oder Verzerrungen der übertragenen Datensignale zuverlässig vermieden werden.

Gemäß einer weiteren besonders bevorzugten Ausführungsform ist das erfindungsgemäße spurgebundene Fahrzeug derart ausgestaltet, dass der erste Bereich und der zweite Bereich in den Wagen jeweils als separate Brandabschnitte ausgebildet sind. Dies ist vorteilhaft, da somit hinsichtlich des Kommunikationsnetzwerkes ein besonders zuverlässiger Brandschutz ermöglicht wird. Sofern nun beispielsweise aufgrund eines Brandes eine Beschallungsanlage, die an eine der beiden Leitungen angebunden ist, ausfällt, so wird durch die Ausbildung des ersten Bereichs und des zweiten Bereichs als separate Brandabschnitte mit hoher Zuverlässigkeit gewährleistet, dass an der in dem jeweils anderen Bereich verlaufenden Leitungen angeschlossene Systeme zumindest für eine zu gewährleistende Mindestdauer weiterhin funktionsfähig sind.

Grundsätzlich können der erste Bereich sowie der zweite Bereich in den Wagen des Fahrzeugs jeweils entsprechend den jeweiligen Anforderungen und Randbedingungen gewählt werden. So ist es beispielsweise denkbar, dass die Bereiche auf unterschiedlichen Seiten der Wagen oder in unterschiedlicher Höhe innerhalb der Wagen angeordnet sind.

Gemäß einer weiteren besonders bevorzugten Ausführungsform des erfindungsgemäßen spurgebundenen Fahrzeugs ist der erste Bereich ein Innenbereich des Daches des jeweiligen Wagens und der zweite Bereich ein Unterflurbereich des jeweiligen Wagens. Dies ist vorteilhaft, da der Innenbereich des Daches sowie der Unterflurbereich der Wagen gegenüber dem Fahrgastinnenraum abgetrennt sind, so dass einerseits eine Beschädigung der Leitungen vermieden und andererseits auch aus brandschutztechnischen Gründen eine erforderliche Trennung besteht. Dadurch, dass in dem zweiten Bereich, d.h. in dem Unterflurbereich des jeweiligen Wagens, vorteilhafterweise eine Anordnung von Netzwerkkomponenten nicht erforderlich ist, ergibt sich darüber hinaus der Vorteil, dass hier keine Einrichtungen zur Stromversorgung erforderlich sind, die in der Regel im Fahrzeuginneren anzuordnen wären, wodurch sich entsprechende Nachteile hinsichtlich des Brandschutzes ergeben würden.

Bei dem Kommunikationsnetzwerk kann es sich grundsätzlich um ein Kommunikationsnetzwerk beliebiger, für sich bekannter Technik handeln. Dies schließt Kommunikationsnetzwerke unterschiedlicher Topologien und unterschiedlicher Technik, sowohl hinsichtlich der Hardware als auch hinsichtlich der verwendeten Protokolle, ein.

Gemäß einer weiteren besonders bevorzugten Weiterbildung des erfindungsgemäßen spurgebundenen Fahrzeugs ist das Kommunikationsnetzwerk ein Kommunikationswerk gemäß der Ethernet-Technik. Entsprechend den einleitenden Erläuterungen bietet dies den Vorteil, dass es sich bei Ethernet um eine grundlegende, weit verbreitete Technik zur Übertragung von Datensignalen handelt. Darüber hinaus sind beispielsweise in Form des so genannten PROFINET industrielle Ausführungsformen des Ethernets ("Industrial Ethernet") bekannt, die bereits an die hohen Verfügbarkeits- und Sicherheitsanforderungen im industriellen Umfeld angepasst sind.

Bei dem Kommunikationsnetzwerk des erfindungsgemäßen spurgebundenen Fahrzeugs kann es sich gemäß einer weiteren besonders bevorzugten Ausführungsform um einen Bestandteil eines fahrzeugübergreifenden Zugbusses handeln. Ein entsprechender Zugbus dient dabei der Informationsübertragung zwischen den Fahrzeugen eines Zuges. Bei einem entsprechenden Zug kann es sich beispielsweise um einen aus mehreren Triebfahrzeugen bestehenden Triebzug handeln.

Gemäß einer weiteren besonders bevorzugten Ausführungsform ist das erfindungsgemäße spurgebundene Fahrzeug derart ausgestaltet, dass die beiden Leitungen des Kommunikationsnetzwerkes an den Enden des Fahrzeuges jeweils an ein zur Anbindung des Kommunikationsnetzwerkes an ein anderes Fahrzeug dienendes Netzwerkelement angebunden sind. Hierdurch wird vorteilhafterweise eine besonders einfache Verbindung der Kommunikationsnetzwerke verschiedener spurgebundener Fahrzeuge zu einem Zugbus ermöglicht.

Gemäß einer weiteren besonders bevorzugten Ausführungsform ist das erfindungsgemäße spurgebundene Fahrzeug derart ausgebildet, dass das Kommunikationsnetzwerk ein Fahrzeugbus ist. Unter einem Fahrzeugbus wird hierbei ein solches Bussystem verstanden, das der Kommunikation beziehungsweise der Datenübertragung innerhalb eines im üblichen Betriebsablauf nicht getrennten Fahrzeugs dient.

Vorzugsweise kann das erfindungsgemäße spurgebundene Fahrzeug auch derart weitergebildet sein, dass die beiden Leitungen des Kommunikationsnetzwerks zu einer Ringstruktur verschaltet sind. Dies bietet den Vorteil, dass dahingehend eine Redundanz innerhalb des Kommunikationsnetzwerkes sichergestellt wird, dass ein einzelner Fehler einen Datenaustausch beziehungsweise die Übertragung von Datensignalen über das Kommunikationsnetzwerk nicht vollständig zum Erliegen bringt.

Vorzugsweise kann das erfindungsgemäße spurgebundene Fahrzeug auch derart weitergebildet sein, dass das Fahrzeug zumindest ein weiteres Kommunikationsnetzwerk aufweist, das mit dem Kommunikationsnetzwerk verschaltet ist. Sofern es sich bei dem Kommunikationsnetzwerk beispielsweise um einen Fahrzeugbus handelt, kann das weitere Kommunikationsnetzwerk beispielsweise als Teil eines Zugbusses ausgeführt sein. Vorzugsweise können hierbei sowohl das Kommunikationsnetzwerk als auch das weitere Kommunikationsnetzwerk jeweils zwei Leitungen aufweisen, die jeweils in dem ersten Bereich beziehungsweise in dem zweiten Bereich verlaufen und in der zuvor beschriebenen Art und Weise derart gekreuzt sind, dass Netzwerkkomponenten zur Auffrischung der in den jeweiligen Leitungen übertragenen Datensignale jeweils ausschließlich im ersten Bereich erforderlich sind.

Bei den Netzwerkkomponenten zur Auffrischung der übertragenen Datensignale kann es sich grundsätzlich um beliebige, für sich jeweils als solche bekannte Netzwerkkomponenten handeln.

Gemäß einer weiteren besonders bevorzugten Ausführungsform des spurgebundenen Fahrzeugs sind die Netzwerkkomponenten zur Auffrischung der übertragenen Datensignale als Repeater, Switch, Hub, Bridge oder Router ausgebildet. Dies ist vorteilhaft, da es sich bei den genannten Netzwerkkomponenten insbesondere im Bereich der Ethernet-basierten Kommunikationsnetzwerke um weit verbreitete, erprobte und vergleichsweise kostengünstige Netzwerkkomponenten handelt, die üblicherweise eine Funktionalität dahingehend beinhalten, dass sie die in der jeweiligen Leitung übertragenen Datensignale auffrischen beziehungsweise regenerieren. Eine entsprechende Auffrischung der Datensignale kann beispielsweise den Empfang eines Datensignals, dessen Aufbereitung und Wiederaussendung, gegebenenfalls in verstärkter Form, beinhalten. Vorteilhafterweise werden hierdurch Rauschen sowie Verzerrungen der Laufzeit und der Pulsform entfernt.

Im Folgenden wird die Erfindung anhand von Ausführungsbeispielen näher erläutert. Hierzu zeigt
- Figur 1: in einer schematischen Skizze ein erstes Ausführungsbeispiel des erfindungsgemäßen spurgebundenen Fahrzeugs,
- Figur 2: in einer schematischen Skizze ein zweites Ausführungsbeispiel des erfindungsgemäßen spurgebundenen Fahrzeugs und
- Figur 3: in einer schematischen Skizze ein drittes Ausführungsbeispiel des erfindungsgemäßen spurgebundenen Fahrzeugs.

Für gleiche beziehungsweise im Wesentlichen gleich wirkende Komponenten sind in den Figuren jeweils dieselben Bezugszeichen verwendet.

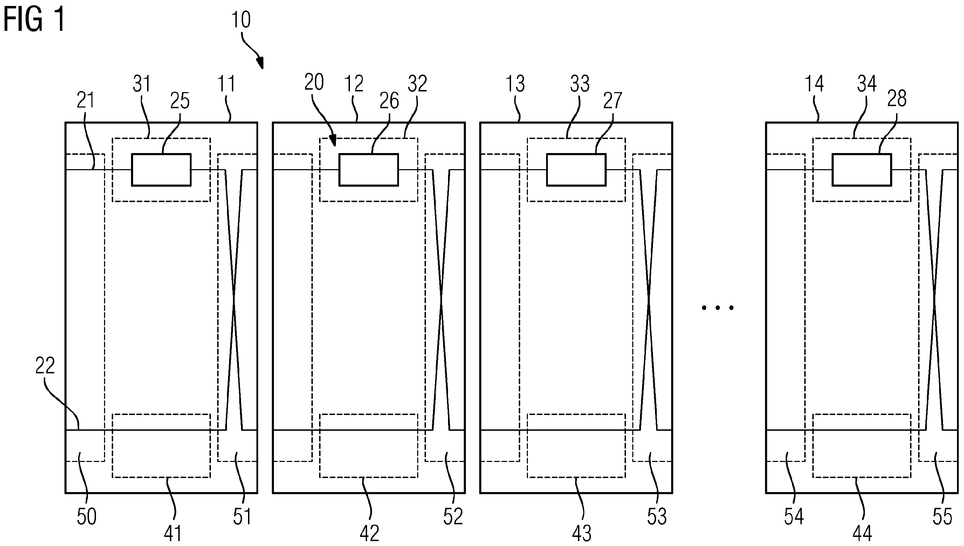

Figur 1 zeigt in einer schematischen Skizze ein erstes Ausführungsbeispiel des erfindungsgemäßen spurgebundenen Fahrzeugs. Dargestellt ist ein spurgebundenes Fahrzeug 10, bei dem es sich beispielsweise um ein schienengebundenes Triebfahrzeug handeln kann, das Wagen 11, 12, 13 und 14 aufweist. Darüber hinaus ist in dem spurgebundenen Fahrzeug 10 ein Kommunikationsnetzwerk 20 vorgesehen, das zwei durch die Wagen 11, 12, 13, 14 des Fahrzeugs 10 verlaufende Leitungen 21, 22 umfasst und zur Übertragung von Datensignalen dient. Bei entsprechenden Datensignalen kann es sich beispielsweise um Steuerinformationen zur Steuerung der Türen der Wagen 11, 12, 13, 14, zur Steuerung der Bremsen, zur Steuerung des Antriebs, zur Steuerung der Klimaanlage oder auch zur Steuerung von Lautsprecheranlagen und Anzeigeeinheiten handeln. Hierzu sind entsprechende Geräte jeweils an eine der beiden Leitungen 21, 22 des Kommunikationsnetzwerkes 20 angebunden.

Entsprechend der Darstellung in Figur 1 verlaufen die Leitungen 21, 22 in den Wagen 11, 12, 13, 14 jeweils in einem ersten Bereich 31, 32, 33, 34 beziehungsweise in einem zweiten Bereich 41, 42, 43, 44. Vorteilhafterweise sind die Bereiche 31, 32, 33, 34, 41, 42, 43, 44 dabei in den Wagen 11, 12, 13, 14 jeweils als separate Brandabschnitte ausgebildet. Dies bedeutet, dass die Leitungen 21, 22 räumlich getrennt voneinander in solchen Bereichen verlaufen, die im Falle eines Brandes des spurgebundenen Fahrzeugs 10 beziehungsweise eines seiner Wagen 11, 12, 13, 14 bestimmte Anforderungen im Hinblick auf das Verhindern einer Ausbreitung des Brandes erfüllen.

Gemäß der Darstellung in Figur 1 zeichnet sich das spurgebundene Fahrzeug 10 beziehungsweise genauer gesagt sein Kommunikationsnetzwerk 20 dadurch aus, dass bei jedem Übergang von einem der Wagen 11, 12, 13, 14 zu einem benachbarten Wagen 12, 13, 14 der Verlauf der jeweiligen einen Leitung 21 beziehungsweise 22 von dem ersten Bereich 31, 32, 33, 34 in den zweiten Bereich 41, 42, 43, 44 des benachbarten Wagens 12, 13, 14 wechselt und umgekehrt der Verlauf der jeweiligen anderen Leitung 22 beziehungsweise 21 von dem zweiten Bereich 41, 42, 43, 44 in den jeweiligen ersten Bereich 31, 32, 33, 34 des benachbarten Wagens wechselt. Dies bedeutet, dass zwischen dem Wagen 11, 12, 13, 14 jeweils Kreuzungsstellen vorgesehen sind, an denen die Leitungen 21, 22 jeweils von dem ersten Bereich 31, 32, 33, 34 in den zweiten Bereich 41, 42, 43, 44 beziehungsweise von dem zweiten Bereich 41, 42, 43, 44 in den ersten Bereich 31, 32, 33, 34 übergehen.

In den ersten Bereichen 31, 32, 33, 34 beziehungsweise an beziehungsweise in der jeweilig in dem ersten Bereich 31, 32, 33, 34 verlaufenden Leitung 21 beziehungsweise 22 sind Netzwerkkomponenten 25, 26, 27, 28 zur Auffrischung der in der jeweiligen Leitung 21 beziehungsweise 22 übertragenen Datensignale vorgesehen. Durch entsprechende Netzwerkkomponenten 25, 26, 27, 28 wird vorteilhafterweise insbesondere eine Länge der Leitung 21 beziehungsweise 22 ermöglicht, die es erlaubt, dass sich die Leitungen 21, 22 entlang der Längsachse des Fahrzeugs 10 über alle Wagen 11, 12, 13, 14 des Fahrzeugs 10 erstrecken. Dabei können die Netzwerkkomponenten 25, 26, 27, 28 beispielsweise als Repeater oder Switch ausgebildet sein.

Im Rahmen der beschriebenen Ausführungsbeispiele sei angenommen, dass sich bei dem Kommunikationsnetzwerk 20 um ein Kommunikationsnetzwerk gemäß der Ethernet-Technik handelt. In Abhängigkeit von den zur Übertragung der Daten beziehungsweise Datensignalen verwendeten Kabeln werden hierbei üblicherweise nur Kabellängen bis maximal 100 Meter unterstützt. Durch die Netzwerkkomponenten 25, 26, 27, 28 wird es somit vorteilhafterweise ermöglicht, dass sich das Kommunikationsnetzwerk 20 beziehungsweise seine Leitungen 21, 22 auch über solche Fahrzeuge 10 erstrecken kann, welche diese maximale zulässige Länge überschreiten.

Bei dem ersten Bereich 31, 32, 33, 34 handelt es sich im Rahmen der beschriebenen Ausführungsbeispiele jeweils um den Innenbereich des Daches des jeweiligen Wagens 11, 12, 13, 14. Dies ist vorteilhaft, da hier üblicherweise Einbauraum zur Kabelverlegung zur Verfügung steht, der in der Regel bereits als separater Brandabschnitt ausgebildet ist. Der zweite Bereich 41, 42, 43, 44 kann vorteilhafterweise im Unterflurbereich des jeweiligen Wagens 11, 12, 13, 14 angeordnet beziehungsweise ausgebildet sein. Auch der entsprechende Bereich ist üblicherweise bereits als separater Brandabschnitt ausgebildet beziehungsweise aufgrund der bestehenden Trennung zum Fahrgastinnenraum mit vergleichsweise wenig Aufwand als entsprechender Brandabschnitt ausführbar.

Durch das in der Figur 1 erkennbare Kreuzen der Leitungen 21, 22 wird somit insbesondere aus einbautechnischer Sicht der Vorteil erzielt, dass in dem zweiten Bereich 41, 42, 43, 44 unabhängig von der Länge der Leitungen 21, 22 keine Netzwerkkomponenten zur Auffrischung der über die Leitungen 21, 22 übertragenen Daten beziehungsweise Datensignale erforderlich sind. Stattdessen können die Netzwerkkomponenten 25, 26, 27, 28 zur Signalauffrischung alle in dem ersten Bereich 31, 32, 33, 34 angeordnet werden, wobei dennoch eine Signalauffrischung beziehungsweise Signalverstärkung in Bezug auf die über beide Leitungen 21, 22 übertragenen Datensignale möglich ist. Hieraus ergeben sich erhebliche Vorteile im Hinblick auf Planung und Realisierung des Fahrzeugs 10. Darüber hinaus ist für jeden der Wagen 11, 12, 13, 14 vorteilhafterweise nur eine Netzwerkkomponente 25, 26, 27, 28 zur Auffrischung der über die Leitungen 21, 22 übertragenen Datensignale erforderlich, so dass sich insgesamt gegenüber einem Aufbau, bei dem die Leitungen 21, 22 jeweils ohne Kreuzungsstellen in dem ersten Bereich 31, 32, 33, 34 beziehungsweise in dem zweiten Bereich 41, 42, 43, 44 geführt werden und jeweils in beiden Bereichen in jedem der Wagen 11, 12, 13, 14 eine Netzwerkkomponente zur Auffrischung der über die jeweiligen Leitung 21 beziehungsweise 22 übertragenen Datensignale vorgesehen ist, eine Reduzierung der aktiven Komponenten des Kommunikationsnetzwerkes 20 ergibt.

Entsprechend der Darstellung der Figur 1 kann vorteilhafterweise eine beliebige Anzahl von Wagen in der dargestellten Art und Weise mit den Leitungen 21, 22 des Kommunikationsnetzwerks 20 versorgt werden. Vorteilhafterweise sind hierbei entsprechend der Darstellung in Figur 1 an den Enden der Wagen 11, 12, 13, 14 jeweils weitere Brandabschnitte 50, 51, 52, 53, 54, 55 vorgesehen, in denen die Kreuzungsstellen der Leitungen 21, 22 liegen. So ist es beispielsweise denkbar, dass die Leitungen 21, 22 im Bereich der eigentlichen Wagenübergänge jeweils seitlich verlaufen und nach erfolgtem Übergang zu dem benachbarten Wagen jeweils in dem anderen Bereich weitergeführt werden.

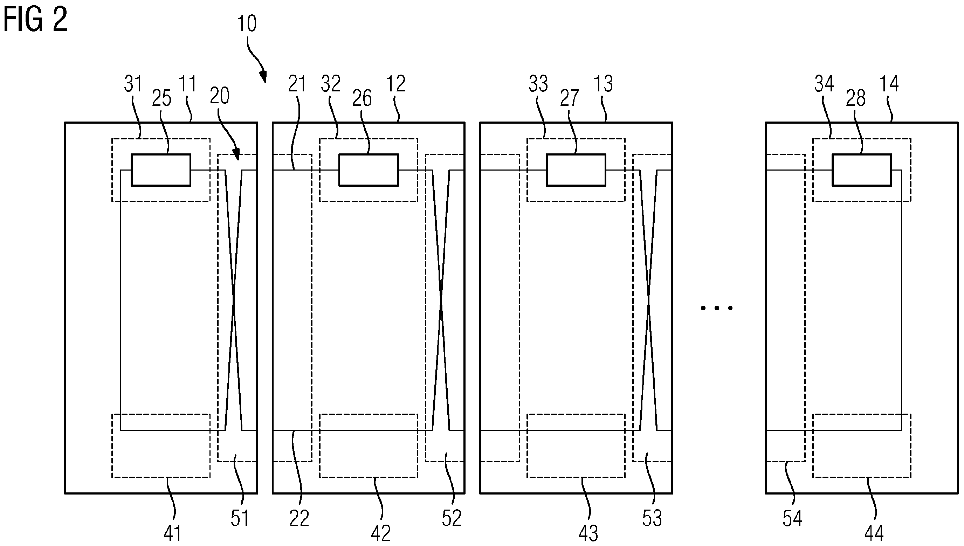

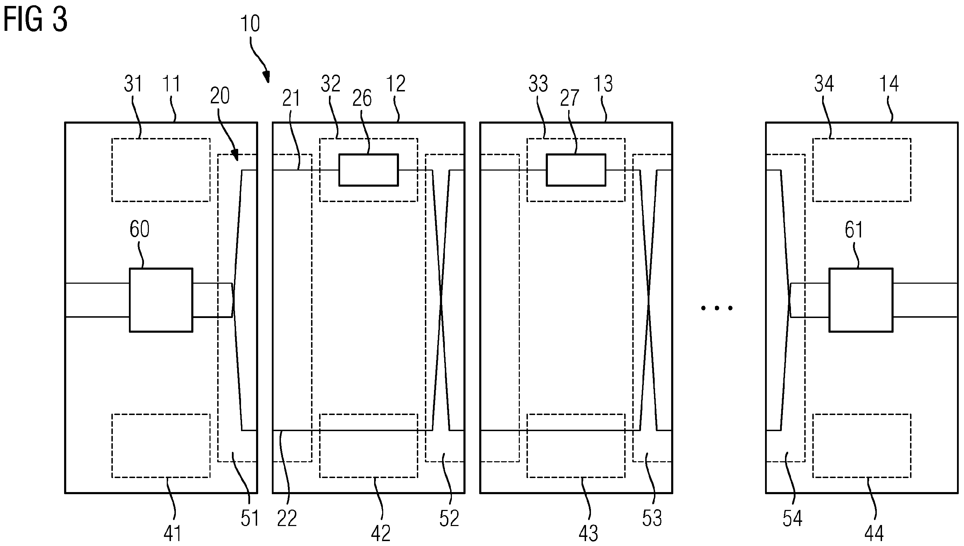

In Abhängigkeit von den jeweiligen Anforderungen und Randbedingungen sind basierend auf dem in der schematischen Darstellung des Ausführungsbeispiels der Figur 1 gezeigten Grundprinzip des spurgebundenen Fahrzeugs beziehungsweise seines Kommunikationsnetzwerkes unterschiedliche Ausführungsformen realisierbar, von denen zwei Beispiele im Folgenden im Zusammenhang mit den Figuren 2 und 3 erläutert werden.

Figur 2 zeigt in einer schematischen Skizze ein zweites Ausführungsbeispiel des erfindungsgemäßen spurgebundenen Fahrzeugs, wobei die schematische Darstellung der Figur 2 im Wesentlichen derjenigen der Figur 1 entspricht.

Bei dem Kommunikationsnetzwerk 20 gemäß dem Ausführungsbeispiel der Figur 2 handelt es sich um ein Kommunikationsnetzwerk in Form eines Fahrzeugbusses, bei dem es sich beispielsweise um ein so genanntes "Consist-Netzwerk" gemäß der Norm IEC 61375-1 handeln kann. Gemäß der Darstellung der Figur 2 sind hierbei die Leitungen 21, 22 des Kommunikationsnetzwerkes 20 zu einer Ringstruktur verschaltet, wodurch vorteilhafterweise eine Redundanz und damit verbunden eine Reduzierung der Fehleranfälligkeit des Kommunikationsnetzwerkes 20 erreicht wird.

Im Übrigen entspricht der Aufbau des Kommunikationsnetzwerkes 20 der Figur 2 im Wesentlichen demjenigen des in Figur 1 gezeigten Ausführungsbeispiels, so dass diesbezüglich auf die entsprechenden vorstehenden Ausführungen verwiesen wird.

Figur 3 zeigt in einer schematischen Skizze ein drittes Ausführungsbeispiel des erfindungsgemäßen spurgebundenen Fahrzeugs, wobei die Darstellung der Figur 3 in ihrer schematischen Art wiederum derjenigen der Figuren 1 und 2 entspricht.

Bei dem Kommunikationsnetzwerk 20 gemäß dem Ausführungsbeispiel der Figur 3 handelt es sich nun um ein Kommunikationsnetzwerk, das Bestandteil eines fahrzeugübergreifenden Zugbusses ist. Bei einem solchen Zugbus kann es sich beispielsweise um ein "Train Backbone Network" gemäß der Norm IEC 61375-1 handeln.

Die beiden Leitungen 21, 22 des Kommunikationsnetzwerkes 20 sind an den Enden des Fahrzeugs 10 jeweils an ein zur Anbindung des Kommunikationsnetzwerkes 20 an ein anderes Fahrzeug dienendes Netzwerkelement 60, 61 angebunden. Die Netzwerkelemente 60, 61 können hierbei beispielsweise als Router ausgeführt sein und gegebenenfalls in einem der durch die Bereiche 31 und 41 beziehungsweise 34 und 44 gebildeten Brandschutzbereiche angeordnet sein. Durch die Netzwerkelemente 60, 61 wird es ermöglicht, das Kommunikationsnetzwerk 20 des Fahrzeugs 10 an das Kommunikationsnetzwerk eines weiteren Fahrzeugs anzubinden und somit einen fahrzeugübergreifenden Zugbus zu schaffen.

Es sei darauf hingewiesen, dass in einem spurgebundenen Fahrzeug, insbesondere einem Schienenfahrzeug, vorteilhafterweise sowohl ein Fahrzeugbus gemäß der Netzwerkstruktur der Figur 2 als auch ein Zugbus gemäß der Netzwerkstruktur der Figur 3 vorhanden sein kann. Vorteilhafterweise sind in diesem Fall beide Kommunikationsnetzwerke, die miteinander verschaltet sein können, jeweils für sich gemäß den Ausführungsbeispielen der Figur 2 beziehungsweise Figur 3 derart ausgebildet, dass zwischen den Wagen 11, 12, 13, 14 jeweils Kreuzungsstellen der jeweiligen Leitungen 21, 22 vorgesehen sind.

Entsprechend den vorstehenden Ausführungen weisen die beschriebenen Ausführungsbeispiele des erfindungsgemäßen Schienenfahrzeugs insbesondere den Vorteil auf, dass in Bezug auf die Leitungen 21, 22 des Kommunikationsnetzwerkes 20 die Brandabschnitte innerhalb des Fahrzeugs 20 eingehalten werden. Zugleich ist vorteilhafterweise in dem zweiten Bereich 41, 42, 43, 44 der Wagen 11, 12, 13, 14 keine aktive Signalauffrischung beziehungsweise Signalverstärkung erforderlich, so dass hier eine besonders einfache Kabelverlegung, unabhängig von sonstigen Bedingungen möglich ist. Dies schließt ein, dass beispielsweise eine Stromversorgung für aktive Netzwerkkomponenten in dem zweiten Bereich 41, 42, 43, 44 vorteilhafterweise nicht erforderlich ist.

Darüber hinaus beruht der Aufbau beziehungsweise die Topologie des Kommunikationsnetzwerks 20 des spurgebundenen Fahrzeugs 10 vorteilhafterweise auf einer minimalen beziehungsweise einer vergleichsweise geringen Anzahl an signalaufbereitenden beziehungsweise signalverstärkenden Baugruppen, d.h. Netzwerkkomponenten 25, 26, 27, 28. Dabei weist das Fahrzeug 10 den Vorteil auf, dass das Kommunikationsnetzwerk 20 vergleichsweise störunempfindlich gegen den Ausfall der Stromversorgung in einem der Wagen 11, 12, 13, 14 des Fahrzeugs 10 ist, da in jedem Wagen 11, 12, 13, 14 eine der Leitungen 21, 22 ohne aktive Komponenten auskommt. Zusätzlich ergibt sich aus der vergleichsweise geringen Anzahl erforderlicher aktiver Komponenten eine Erhöhung der Verfügbarkeit des Kommunikationsnetzwerkes 20.

Weiterhin ist zu beachten, dass das spurgebundene Fahrzeug 10 vorteilhafterweise mit mechanisch und elektrisch identisch aufgebauten Wagen 11, 12, 13, 14 realisiert werden kann, wodurch sich Vorteile hinsichtlich Kosten und Aufwand bei der Herstellung sowie im Betrieb des Fahrzeugs 10 ergeben.

## Patentansprüche

1. Spurgebundenes Fahrzeug (10), insbesondere Schienenfahrzeug, mit mehreren Wagen (11, 12, 13, 14) und einem Kommunikationsnetzwerk (20) zur Übertragung von Datensignalen, das zwei durch die Wagen (11, 12, 13, 14) des Fahrzeugs verlaufende Leitungen (21, 22) umfasst,
**dadurch gekennzeichnet, dass**
- in den Wagen (11, 12, 13, 14) jeweils eine der Leitungen (21, 22) in einem ersten Bereich (31, 32, 33, 34) und die andere der Leitungen (21, 22) in einem von diesem räumlich getrennten zweiten Bereich (41, 42, 43, 44) verläuft,
- in zumindest einem der Wagen (z.B. 11) der Verlauf der jeweiligen einen Leitung (21) von dem ersten Bereich (31) in den zweiten Bereich (42) und der Verlauf der jeweiligen anderen Leitung (22) von dem zweiten Bereich (41) in den ersten Bereich (32) wechselt und
- in dem ersten Bereich (31, 32, 33, 34) Netzwerkkomponenten (25, 26, 27, 28) zur Auffrischung der in den Leitungen (21, 22) übertragenen Datensignale vorgesehen sind.

2. Spurgebundenes Fahrzeug nach Anspruch 1,
**dadurch gekennzeichnet, dass**
beim Übergang von zumindest einem der Wagen (z.B. 11) zu zumindest einem benachbarten der Wagen (12) der Verlauf der jeweiligen einen Leitung (21) von dem ersten Bereich (31) des einen Wagens (11) in den zweiten Bereich (42) des benachbarten Wagens (12) und der Verlauf der jeweiligen anderen Leitung (22) von dem zweiten Bereich (41) des einen Wagens (11) in den ersten Bereich (32) des benachbarten Wagens (12) wechselt.

3. Spurgebundenes Fahrzeug nach Anspruch 1 oder 2,
**dadurch gekennzeichnet, dass**
- bei jedem Übergang von einem der Wagen (z.B. 11) zu einem der benachbarten Wagen (z.B. 12) des Fahrzeugs (10) der Verlauf der jeweiligen einen Leitung (21) von dem ersten Bereich (31) in den zweiten Bereich (42) und der Verlauf der jeweiligen anderen Leitung (22) von dem zweiten Bereich (41) in den ersten Bereich (32) wechselt und
- in dem ersten Bereich (31, 32, 33, 34) von jedem der Wagen (11, 12, 13, 14) des Fahrzeugs (10) jeweils zumindest eine Netzwerkkomponente (25, 26, 27, 28) zur Auffrischung der in der jeweiligen Leitung (21 bzw. 22) übertragenen Datensignale vorgesehen ist.

4. Spurgebundenes Fahrzeug nach einem der vorangehenden Ansprüche,
**dadurch gekennzeichnet, dass**
der erste Bereich (31, 32, 33, 34) und der zweite Bereich (41, 42, 43, 44) in den Wagen (11, 12, 13, 14) jeweils als separate Brandabschnitte ausgebildet sind.

5. Spurgebundenes Fahrzeug nach einem der vorangehenden Ansprüche,
**dadurch gekennzeichnet, dass**
der erste Bereich (31, 32, 33, 34) ein Innenbereich des Daches des jeweiligen Wagens (11, 12, 13, 14) und der zweite Bereich (41, 42, 43, 44) ein Unterflurbereich des jeweiligen Wagens (11, 12, 13, 14) ist.

6. Spurgebundenes Fahrzeug nach einem der vorangehenden Ansprüche,
**dadurch gekennzeichnet, dass**
das Kommunikationsnetzwerk (20) ein Kommunikationsnetzwerk gemäß der Ethernet-Technik ist.

7. Spurgebundenes Fahrzeug nach einem der vorangehenden Ansprüche,
**dadurch gekennzeichnet, dass**
das Kommunikationsnetzwerk (20) Bestandteil eines fahrzeugübergreifenden Zugbusses ist.

8. Spurgebundenes Fahrzeug nach Anspruch 7,
**dadurch gekennzeichnet, dass**
die beiden Leitungen (21, 22) des Kommunikationsnetzwerkes (20) an den Enden des Fahrzeuges (10) jeweils an ein zur Anbindung des Kommunikationsnetzwerkes (20) an ein anderes Fahrzeug dienendes Netzwerkelement (60, 61) angebunden sind.

9. Spurgebundenes Fahrzeug nach einem der Ansprüche 1 bis 6,
**dadurch gekennzeichnet, dass**
das Kommunikationsnetzwerk (20) ein Fahrzeugbus ist.

10. Spurgebundenes Fahrzeug nach einem der vorangehenden Ansprüche,
**dadurch gekennzeichnet, dass**
die beiden Leitungen (21, 22) des Kommunikationsnetzwerks (20) zu einer Ringstruktur verschaltet sind.

11. Spurgebundenes Fahrzeug nach einem der vorangehenden Ansprüche,
**dadurch gekennzeichnet, dass**
das Fahrzeug (10) zumindest ein weiteres Kommunikationsnetzwerk aufweist, das mit dem Kommunikationsnetzwerk (20) verschaltet ist.

12. Spurgebundenes Fahrzeug nach einem der vorangehenden Ansprüche,
**dadurch gekennzeichnet, dass**
die Netzwerkkomponenten (25, 26, 27, 28) zur Auffrischung der übertragenen Datensignale als Repeater, Switch, Hub, Bridge oder Router ausgebildet sind.

## Claims

1. Railborne vehicle (10), particularly a rail vehicle, having a plurality of wagons (11, 12, 13, 14) and a communication network (20) for transmitting data signals, which communication network (20) comprises two lines (21, 22) which run through the wagons (11, 12, 13, 14) of the vehicle, **characterized in that**
- in the wagons (11, 12, 13, 14), in each case one of the lines (21, 22) runs in a first region (31, 32, 33, 34) and the other one of the lines (21, 22) runs in a second region (41, 42, 43, 44) which is spatially separate from the former
- in at least one of the wagons (e.g. 11), the course of the respective one line (21) changes from the first region (31) into the second region (42) and the course of the respective other line (22) changes from the second region (41) into the first region (32) and
- network components (25, 26, 27, 28) for refreshing the data signals which are transmitted in the lines (21, 22) are provided in the first region (31, 32, 33, 34).

2. Railborne vehicle according to Claim 1, **characterized in that**, on transition from at least one of the wagons (e.g. 11) to at least one adjacent wagon (12), the course of the respective one line (21) changes from the first region (31) of the one wagon (11) into the second region (42) of the adjacent wagon (12) and the course of the respective other line (22) changes from the second region (41) of the one wagon (11) to the first region (32) of the adjacent wagon (12).

3. Railborne vehicle according to Claim 1 or 2, **characterized in that**
- at each transition from one of the wagons (e.g. 11) to one of the adjacent wagons (e.g. 12) of the vehicle (10), the course of the respective one line (21) changes from the first region (31) into the second region (42) and the course of the respective other line (22) changes from the second region (41) into the first region (32), and
- in the first region (31, 32, 33, 34) of each of the wagons (11, 12, 13, 14) of the vehicle (10), in each case at least one network component (25, 26, 27, 28) for refreshing the data signals transmitted in the respective line (21 or 22 respectively) is provided.

4. Railborne vehicle according to one of the preceding claims, **characterized in that** the first region (31, 32, 33, 34) and the second region (41, 42, 43, 44) are in each case designed as separate fire sections in the wagons (11, 12, 13, 14).

5. Railborne vehicle according to one of the preceding claims, **characterized in that** the first region (31, 32, 33, 34) is an internal region of the roof of the respective wagon (11, 12, 13, 14) and the second region (41, 42, 43, 44) is an underfloor region of the respective wagon (11, 12, 13, 14).

6. Railborne vehicle according to one of the preceding claims, **characterized in that** the communication network (20) is a communication network according to Ethernet technology.

7. Railborne vehicle according to one of the preceding claims, **characterized in that** the communication network (20) is a component of a multi-vehicle train bus.

8. Railborne vehicle according to Claim 7, **characterized in that** the two lines (21, 22) of the communication network (20) are in each case linked at the ends of the vehicle (10) to a network element (60, 61) used for linking the communication network (20) to another vehicle.

9. Railborne vehicle according to one of Claims 1 to 6, **characterized in that** the communication network (20) is a vehicle bus.

10. Railborne vehicle according to one of the preceding claims, **characterized in that** the two lines (21, 22) of the communication network (20) are interconnected to form a ring structure.

11. Railborne vehicle according to one of the preceding claims, **characterized in that** the vehicle (10) has at least one further communication network which is interconnected with the communication network (20).

12. Railborne vehicle according to one of the preceding claims, **characterized in that** the network components (25, 26, 27, 28) for refreshing the transmitted data signals are designed as repeater, switch, hub, bridge or router.

## Revendications

1. Véhicule (10) guidé sur rail, notamment véhicule ferroviaire, comprenant plusieurs voitures (11, 12, 13, 14) et un réseau (20) de communication pour transmettre des signaux de données, qui comprend deux lignes (21, 22) passant dans les voitures (11, 12, 13, 14) du véhicule, **caractérisé en ce que**
- dans les voitures (11, 12, 13, 14) l'une des lignes (21, 22) passe dans une première région (31, 32, 33, 34), et l'autre ligne (21, 22) dans une deuxième région (41, 42, 43, 44) qui en est séparée dans l'espace,
- dans au moins l'une des voitures (par exemple 11), le parcours d'une ligne (21) passe de la première région (31) à la deuxième région (42) et le parcours de l'autre ligne (22) de la deuxième région (41) à la première région (32) et
- dans la première région (31, 32, 33, 34), des composants (25, 26, 27, 28) du réseau sont prévus pour régénérer les signaux de données transmis dans les lignes (21, 22).

2. Véhicule guidé sur rail suivant la revendication 1,
**caractérisé en ce que**
au passage d'au moins l'une des voitures (par exemple 11) à au moins une voiture (12) voisine, le parcours d'une ligne (21) passe de la première région (31) de la une voiture (11) à la deuxième région (42) de la voiture (12) voisine, et le parcours de l'autre ligne (22) de la deuxième région (41) de la une voiture (11) à la première région (32) de la voiture (12) voisine.

3. Véhicule guidé sur rail suivant la revendication 1 ou 2,
**caractérisé en ce que**
- à chaque passage de l'une des voitures (par exemple 11) à une voiture (par exemple 12) voisine du véhicule (10), le parcours d'une ligne (21) passe de la première région (31) à la deuxième région (42), et le parcours de l'autre ligne (22) de la deuxième région (41) à la première région (32) et
- dans la première région (31, 32, 33, 34) de chacune des voitures (11, 12, 13, 14) du véhicule (10) est prévu au moins un composant (25, 26, 27, 28) du réseau pour régénérer les signaux de données à transmettre dans la ligne (21 ou 22) respective.

4. Véhicule guidé sur rail suivant l'une des revendications précédentes,
**caractérisé en ce que**
la première région (31, 32, 33, 34) et la deuxième région (41, 42, 43, 44) sont constituées dans les voitures (11, 12, 13, 14) respectivement sous la forme de sections séparées par coupe-feu.

5. Véhicule guidé sur rail suivant l'une des revendications précédentes,
**caractérisé en ce que**
la première région (31, 32, 33, 34) est une région intérieure du toit de la voiture (11, 12, 13, 14), et la deuxième région (41, 42, 43, 44) une région sous caisse de la voiture (11, 12, 13, 14).

6. Véhicule guidé sur rail suivant l'une des revendications précédentes,
**caractérisé en ce que**
le réseau (20) de communication est un réseau de communication suivant la technique Ethernet.

7. Véhicule guidé sur rail suivant l'une des revendications précédentes,
**caractérisé en ce qu'**
un réseau (20) de communication fait partie d'un bus de train empiétant sur le véhicule.

8. Véhicule guidé sur rail suivant la revendication 7,
**caractérisé en ce que**
les deux lignes (21, 22) du réseau (20) de communication sont, aux extrémités du véhicule (10), reliées respectivement à un élément (60, 61) de réseau servant à relier le réseau (20) de communication à un autre véhicule.

9. Véhicule guidé sur rail suivant l'une des revendications 1 à 6,
**caractérisé en ce que**
le réseau (20) de communication est un bus de véhicule.

10. Véhicule guidé sur rail suivant l'une des revendications précédentes,
**caractérisé en ce que**
les deux lignes (21, 22) du réseau (20) de communication sont câblées en une structure annulaire.

11. Véhicule guidé sur rail suivant l'une des revendications précédentes,
**caractérisé en ce que**
le véhicule (10) a au moins un autre réseau de communication, qui est connecté au réseau (20) de communication.

12. Véhicule guidé sur rail suivant l'une des revendications précédentes,
**caractérisé en ce que**
les composants (25, 26, 27, 28) du réseau sont constitués pour la régénération des signaux de données transmis sous la forme de repeater, switch, hub, bridge ou router.
